# EUROPEAN PATENT SPECIFICATION

(11) **EP 1 507 353 B1**
(45) Date of publication and mention of the grant of the patent: **10.04.2013**
(21) Application number: 04019211.4
(22) Date of filing: 12.08.2004
(51) Int. Cl.: H04L 1/18

(54) **Transmission/reception of data flows with different QoS requirements**
Übertragung/Empfang von Datenströmen mit verschiedenen QoS-Anforderungen
Transmission/réception des flux de données avec exigences différents de qualité de service

(30) Priority: 14.08.2003 JP 2003207593
(43) Date of publication of application: 16.02.2005
(73) Proprietor: NTT DoCoMo, Inc., Tokyo 100-6150 (JP)
(72) Inventor: Kawakami, Hiroshi, Tokyo 100-6150 (JP)
(74) Representative: Viering, Jentschura & Partner

(56) References cited:
- EP-A- 0 377 136
- WO-A-97/24843
- WO-A-99/07101

## Description

### BACKGROUND OF THE INVENTION

### Field of the Invention

The present invention relates to a frame transmission/reception system, a frame transmitting apparatus, a frame receiving apparatus, and a frame transmission/reception method.

### Related Background Art

As a third-generation mobile communication system there is the UMTS (Universal Mobile Telecommunication System) standardized by 3GPP (3rd Generation Partnership Project). In the radio access method of UMTS, communication using a unique radio protocol is carried out between a physical layer and an application layer. The radio protocol is set between a mobile station and a radio network control station (RNC), and consists of sublayers of PDCP (Packet Data Convergence Protocol), RLC (Radio Link Control), and MAC (Medium Access Control). Among these the RLC sublayer (cf. Non-patent Document 1 cited below) establishes a connection at a time of a start of communication to permit acknowledgement type and unacknowledgement type communication. The RLC sublayer determines one of three modes: TM (Transparent Mode) , UM (Unacknowledgement Mode), and AM (Acknowledgement Mode) at the time of establishing the RLC connection. TM has a function of only dividing upper-layer data and transferring it to a lower sublayer (or the reverse). UM and AM enable upper-layer data to be loaded in a divided or multiplexed state on RLC-PDU, and are suitable for transfer of variable-length data such as IP (Internet Protocol) packets. UM has no retransmission function, while AM has a function of correcting an error due to degradation of quality in a radio section by retransmission control. These modes are set on a connection-by-connection basis and it is necessary to independently set a connection for a case of handling a data flow with need for retransmission and a connection for a case of handling a data flow without need for retransmission.

Where a mobile station performs a communication consisting of one data flow, it can select an RLC connection mode suitable for QoS (Quality of Service) requirements for the data flow. In a scheme in which a number of communication terminals perform mobile communication through one mobile station, however, there are two conceivable forms of utilization of the RLC connection. One is a form in which all data flows are transferred by one RLC connection, and the other a form in which an RLC connection is established for each data flow. The former has a problem that all the data flows with various QoS requirements must have the same QoS condition on the RLC connection. The correction for data error in a radio section with a high error rate by automatic retransmission control is an essential technology for improvement in throughput in the case of the data communication that is required to make no error. However, for example, if the same retransmission is carried out in the case of voice communication, a communication delay due to retransmission will raise a problem of failure in meeting required QoS. Therefore, the retransmission control in the radio protocol should be carried out according to QoS. The latter has a problem that one mobile station must perform management of many RLC connections. This requires that the apparatus have the performance of managing the RLC connections for respective data flows. In addition, a transport connection for transfer of RLC frames is simultaneously switched for an entire data flow every handover of a mobile station, which imparts loads on the mobile station and network and which degrades the performance thereof. There is another problem that when a mobile station adds a data flow, a connection delay occurs for establishment of an RLC connection.

Non-patent Document 1: 3GPP, TS23.107, "Radio Link Control (RLC) protocol specification," Dec. 2002.

Document WO 99/07101 (Ericsson Telefon A B), 11 Feb. 1999 discloses the transmission and reception using acknowledged and unacknowledged mode.

### SUMMARY OF THE INVENTION

Where one mobile station transfers data flows with a plurality of QoS requirements as described above, the same retransmission condition is applied to the transfer of the data flows by a single radio protocol connection. It was thus difficult to transfer data flows so as to satisfy both an application requiring real-timeness and an application not requiring real-timeness. By setting different radio protocol connections according to respective QoS conditions, it becomes feasible to satisfy each of the QoS conditions. However, the establishment of many radio protocol connections results in producing a delay due to establishment of a radio protocol connection at every addition of a new data flow. The change of a path of a radio protocol connection at the same time as a handover of each mobile station will increase control loads on a radio access network and, in turn, degrade the network performance.

An object of the present invention is therefore to provide a frame transmission/reception system, a frame transmitting apparatus, a frame receiving apparatus, and a frame transmission/reception method capable of reducing the establishment of radio protocol connections, while improving the communication quality and the performance of mobile equipment and network.

A frame transmission/reception system according to the present invention is a frame transmission/reception system for transferring a data packet on a connection established prior to communication, the system comprising: identifier providing means for building frames for transmission of the data packet and for providing each of the built frames with a QoS identifier for identifying whether the frame is an acknowledgement type frame or an unacknowledgement type frame; retransmission requesting means for identifying whether a frame is an acknowledgement type frame or an unacknowledgement type frame, based on the QoS identifier provided therefor, and for determining whether a frame is lost, only for each acknowledgement type frame, and requesting retransmission of the lost acknowledgement type frame; and retransmitting means for retransmitting the acknowledgement type frame under the request for the retransmission.

Since the frame transmission/reception system of the present invention is configured to determine whether each frame is an acknowledgement type frame, based on the QoS identifier, and to determine whether a frame is lost, only for each acknowledgement type frame, and request transmission of a lost frame, it is able to perform the retransmission control for the acknowledgement type frames only.

A frame transmitting apparatus according to the present invention is a frame transmitting apparatus used in a frame transmission/reception system for transferring a data packet on a connection established prior to communication, the frame transmitting apparatus comprising: identifier providing means for building frames for transmission of the data packet and for providing each of the built frames with a QoS identifier for identifying whether the frame is an acknowledgement type frame or an unacknowledgement type frame.

Since the frame transmitting apparatus of the present invention is configured to provide each of the built frames with a QoS identifier, it is able to provide each frame with information for determining whether the frame is an acknowledgement type frame.

In the frame transmitting apparatus of the present invention, preferably, the data packet is comprised of a plurality of data flows, and the identifier providing means provides each of the frames with a data flow identifier for identifying one of the data flows. Since each frame is provided with a data flow identifier for identification of the data flow, it is feasible to provide each frame with information for identifying to which data flow the frame belongs.

Preferably, the frame transmitting apparatus of the present invention comprises number providing means for providing each acknowledgement type frame with a sequence number for each established connection. Since acknowledgement type frames are provided with their respective sequence numbers, for example, a frame receiving apparatus is able to acknowledge a loss of an acknowledgement type frame from discontinuity of the sequence numbers.

Preferably, the frame transmitting apparatus of the present invention comprises number providing means for providing each acknowledgement type frame with a sequence number for each established connection and for each data flow identifier. Since sequence numbers are provided for each data flow identifier, for example, a frame receiving apparatus is able to acknowledge a loss of an acknowledgement type frame from discontinuity of the sequence numbers in each data flow.

A frame receiving apparatus according to the present invention is a frame receiving apparatus used in a frame transmission/reception system for transferring a data packet on a connection established prior to connection, the frame receiving apparatus comprising: retransmission requesting means for identifying whether a frame is an acknowledgement type frame or an unacknowledgement type frame, based on a QoS identifier provided therefor, and for determining whether a frame is lost, only for each acknowledgement type frame, and requesting retransmission of the lost acknowledgement type frame.

Since the frame receiving apparatus of the present invention is configured to determine whether a frame is an acknowledgement type frame, based on its QoS identifier, and to determine whether a frame is lost, only for each acknowledgement type frame, and request retransmission of a lost frame, it is able to perform the retransmission control for the acknowledgement type frames only.

Preferably, the frame receiving apparatus of the present invention comprises holding means for, when the retransmission requesting means requests retransmission of the acknowledgement type frame, temporarily holding a previously received acknowledgement type frame until reception of the acknowledgement type frame retransmitted according to the request for the retransmission. Since a previously received acknowledgement type frame is temporarily held, it is feasible to reconfigure a data packet by combining it with the retransmitted acknowledgement type frame.

In the frame receiving apparatus of the present invention, preferably, the data packet is comprised of a plurality of data flows, and, where each of the frames is provided with a data flow identifier for identifying each of the data flows, the holding means temporarily holds an acknowledgement type frame with the same data flow identifier as that of the lost acknowledgement type frame. Since a previously received acknowledgement type frame is temporarily held for each data flow, it is feasible to reconfigure a data packet by combining it with the retransmitted acknowledgement type frame in each data flow.

A frame transmission/reception method of the present invention is a frame transmission/reception method of transferring a data packet on a connection established prior to communication, the frame transmission/reception method comprising: a step wherein identifier providing means builds frames for transmission of the data packet and provides each of the built frames with a QoS identifier for identifying whether the frame is an acknowledgement type frame or an unacknowledgement type frame; a step wherein retransmission requesting means identifies whether a frame is an acknowledgement type frame or an unacknowledgement type frame, based on the QoS identifier provided therefor, and the retransmission requesting means determines whether a frame is lost, only for each acknowledgement type frame, and requests retransmission of the lost acknowledgement type frame; and a step wherein retransmitting means retransmits the acknowledgement type frame under the request for the retransmission.

In the frame transmission/reception method of the present invention, whether a frame is an acknowledgement type frame is determined based on its QoS identifier, whether a frame is lost is determined for each acknowledgement type frame only, and retransmission of a lost frame is requested based on the determination; therefore, it is feasible to perform the retransmission control for the acknowledgement type frames only.

### BRIEF DESCRIPTION OF THE DRAWINGS

The present invention may be more readily described with reference to the accompanying drawings, in which:
Fig. 1 is an illustration showing a configuration of a network for describing an embodiment of the present invention;
Fig. 2 is an illustration showing a configuration of a frame transmitting apparatus as an embodiment of the present invention;
Fig. 3 is an illustration showing a configuration of a frame receiving apparatus as an embodiment of the present invention;
Fig. 4 is an illustration for explaining identifiers used in an embodiment of the present invention;
Fig. 5 is an illustration for explaining an operation of the frame transmitting apparatus and frame receiving apparatus as an embodiment of the present invention;
Fig. 6 is an illustration for explaining another operation of the frame transmitting apparatus and frame receiving apparatus as an embodiment of the present invention; and
Fig. 7 is a flowchart of an operation of the frame transmitting apparatus and frame receiving apparatus as an embodiment of the present invention.

### DESCRIPTION OF THE PREFERRED EMBODIMENTS

The essence of the present invention can be readily understood in view of the following detailed description with reference to the accompanying drawings presented for illustrative purposes only. Subsequently, embodiments of the present invention will be described with reference to the accompanying drawings. The same portions will be denoted by the same reference symbols as much as possible, without redundant description.

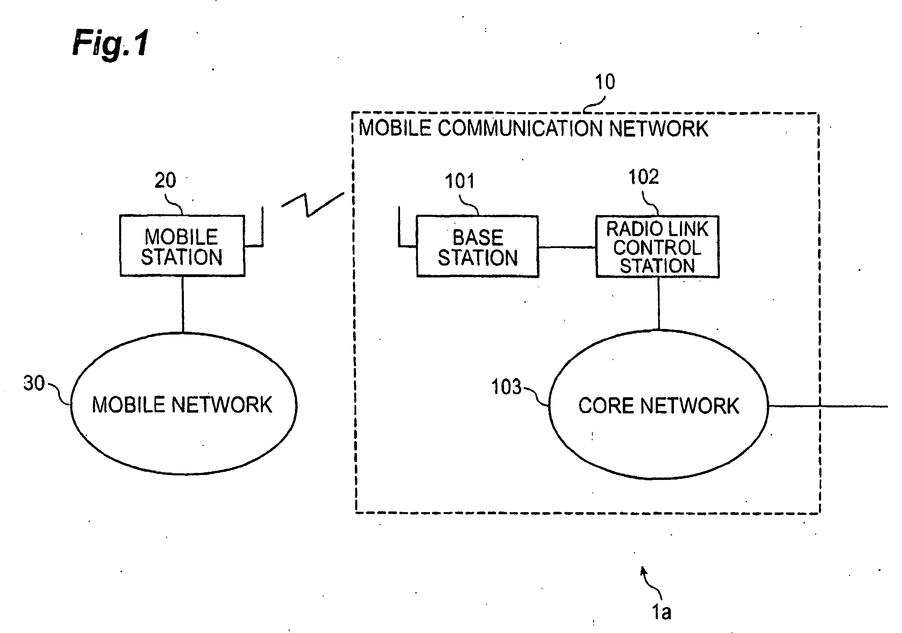

As a premise for the description of the present embodiment a network 1a (frame transmission/reception system) will be described using Fig. 1. This network 1a is comprised of a mobile communication network 10, a mobile station 20, and a mobile network 30. The mobile communication network 10 includes a base station 101, a radio link control station 102, and a core network 103. The mobile station 20 has a radio interface to access the mobile communication network 10 and is linked to the mobile network 30 consisting of at least one communication terminal. The base station 101 has a radio interface to the mobile station 20, and an interface to the radio link control station 102. The radio link control station 102 is able to communicate with the exterior of the mobile communication network 10 through the core network 103. In the network 1a of Fig. 1, the base station 101 and the radio link control station 102 are described as separate nodes, but they can also be configured as a single node. The mobile station 20 transfers data flows from many communication terminals of the mobile network 30 through one radio interface to the mobile communication network 10.

When the mobile station 20 requests the mobile communication network 10 to perform communication for transfer of packet, a radio protocol connection is established between the mobile station 20 and the radio link control station 102. The radio protocol has the functions of generating radio frames and performing the retransmission control. The radio frames can be of either fixed length or a variable length. The radio protocol has a function of, when a length of an upper-layer data packet is longer than a maximum load length of radio frame, dividing the upper-layer data into pieces, loading them on radio frames, and transferring them to a lower layer, and a function of, when receiving a data packet divided into a plurality of radio frames, building them into original data and transferring it to an upper layer.

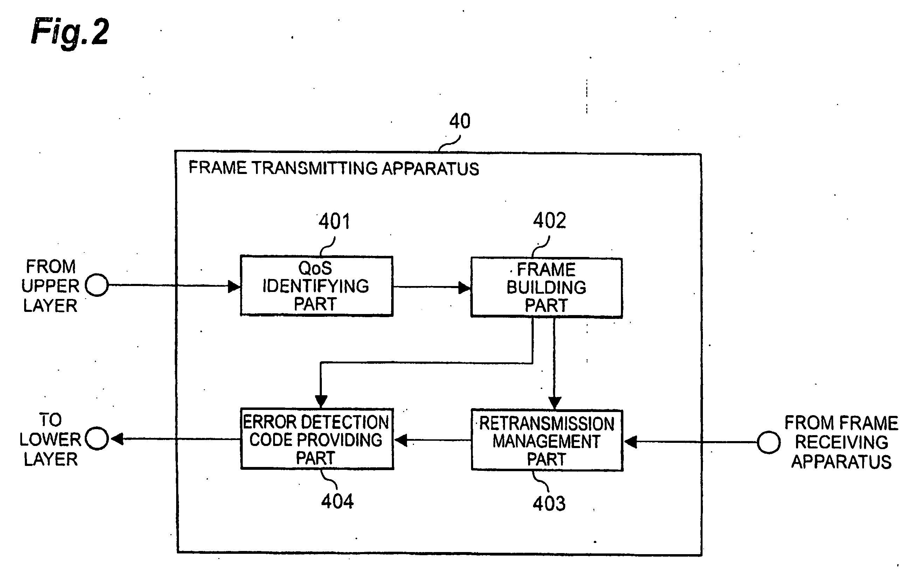

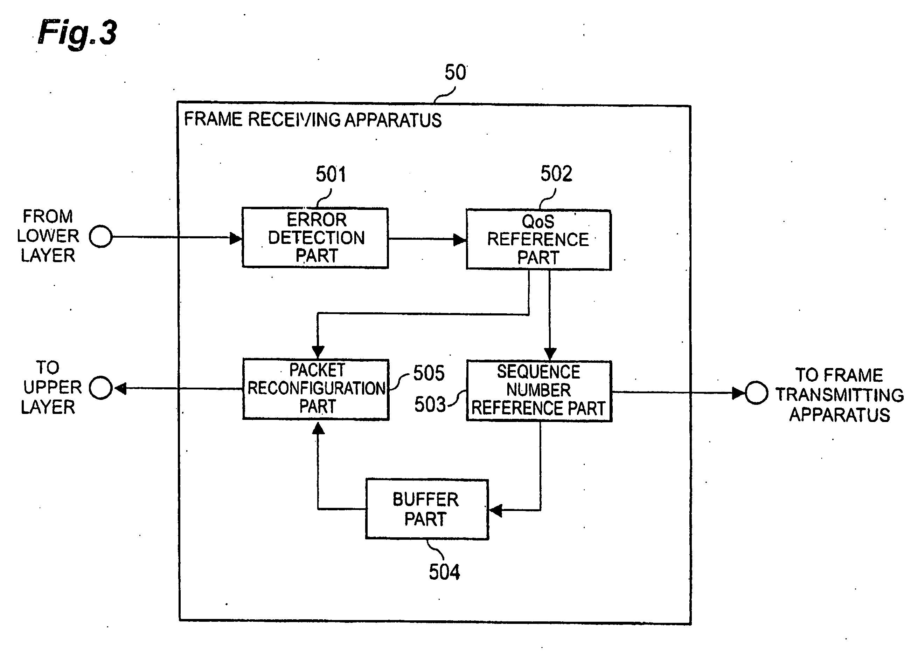

Subsequently, a frame transmitting apparatus 40 and a frame receiving apparatus 50 of the present embodiment will be described. The frame transmitting apparatus 40 and the frame receiving apparatus 50 of the present embodiment are installed in each of the mobile station 20 and the radio link control station 102 so as to terminate a radio protocol. A configuration of the frame transmitting apparatus 40 of the present embodiment is shown in Fig. 2, and a configuration of the frame receiving apparatus 50 in Fig. 3. In the description of the frame transmitting apparatus 40 and frame receiving apparatus 50 below, it is assumed that the frame transmitting apparatus 40 is placed in the mobile station 20 and the frame receiving apparatus 50 in the radio link control station 102.

First, the frame transmitting apparatus 40 will be described with reference to Fig. 2. The frame transmitting apparatus 40 includes a QoS identifying part 401, a frame building part 402 (identifier providing means and number providing means), a retransmission management part 403 (retransmitting means), and an error detection code providing part 404. When the mobile station 20 with the frame transmitting apparatus 40 therein receives a data packet from the mobile network 30, it loads the data packet on a radio frame in accordance with a radio frame format. When this radio frame has the length shorter than that of the data packet, the data packet is divided into pieces and these pieces are loaded on radio frames.

The QoS identifying part 401 of the frame transmitting apparatus 40 is a part that identifies QoS information described in a data packet or QoS information of a connection forming a data flow. Conceivable examples of the QoS information described in a data packet include Differentiated Services Code Point (DSCP) in Internet Protocol (IP) packet and others, and conceivable examples of the QoS information of connection include service categories set for respective Virtual Channel Connections (VCCs) in Asynchronous Transfer Mode (ATM) and others.

The frame building part 402 of the frame transmitting apparatus 40 is a part that divides a data packet, if necessary, to generate radio frames. The frame building part 402 divides a data packet to generate radio frames if the length of the data packet is longer than the maximum load length of radio frame. The frame building part 402 provides a header of each generated radio frame with a QoS identifier according to the QoS information described in the data packet or the QoS information of the connection forming the data flow. In general communication with a QoS level of tolerating some error but being strict on delay like voice communication or the like is handled so as not to perform retransmission. On the other hand, communication with a QoS level of tolerating some delay but not tolerating error like data communication is subjected to error correction by retransmission control. In the description hereinafter, a frame to request retransmission in conjunction with data error or frame loss will be referred to as an acknowledgement type frame, and a frame without retransmission as an unacknowledgement type frame. The frame building part 402 sequentially provides acknowledgement type frames of one radio protocol connection with sequence numbers. The frame building part 402 outputs acknowledgement type frames to the retransmission management part 403 and outputs unacknowledgement type frames to the error detection code providing part 404.

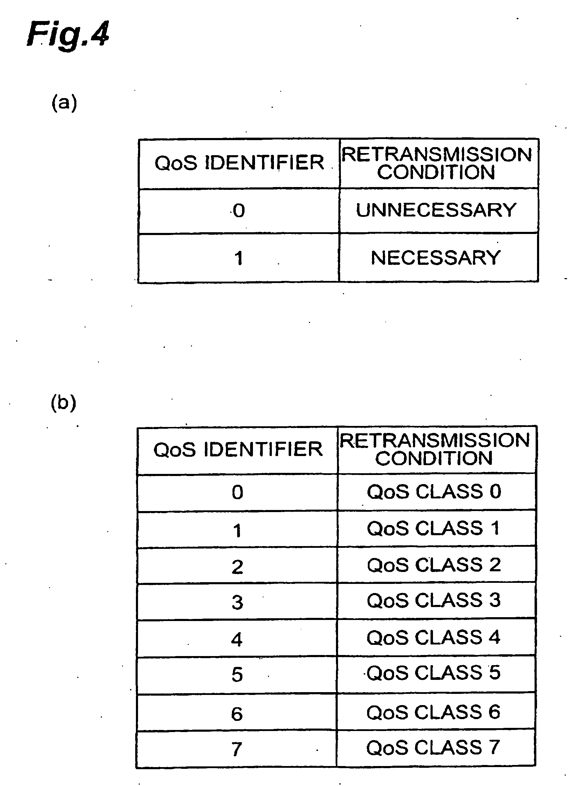

Examples of QoS identifiers will be described with reference to Figs. 4. The example of Fig. 4 (a) is an example in which whether it is necessary to perform retransmission is determined from the QoS information of each data packet and in which an identifier is provided based on the determination. In the example of Fig. 4 (a), the QoS identifier of "0" indicates an unacknowledgement type frame, and the QoS identifier of "1" an acknowledgement type frame. The example of Fig. 4 (b) is an example in which the QoS information of each data packet is mapped as it is. In the example of Fig. 4 (b), it is necessary to preliminarily determine which type of retransmission control should be performed for each QoS class of data packet, between the frame transmitting apparatus 40 and the frame receiving apparatus 50.

Referring back to Fig. 2, the retransmission management part 403 is a part that buffers an acknowledgement type frame for retransmission and, when receiving a request from the frame receiving apparatus 50, outputs a corresponding acknowledgement type frame to the error detection code providing part 404. The retransmission management part 403 starts a retransmission timer at the same time as transmission of a frame, and buffers the frame for retransmission before receiving an acknowledgement response (ACK) from the frame receiving apparatus. When receiving an ACK, the retransmission management part 403 discards the buffered frame. When detecting a timeout of the retransmission timer or detecting a frame loss from a sequence number of an ACK, the retransmission management part 403 outputs the buffered frame to the error detection code providing part 404.

The error detection code providing part 404 is a part that provides error detection codes for radio frames (acknowledgement type frames and unacknowledgement type frames) outputted from the frame building part 402 and from the retransmission management part 403 and that outputs the radio frames to a lower layer for transmitting them to the frame receiving apparatus 50.

Subsequently, the frame receiving apparatus 50 will be described with reference to Fig. 3. The frame receiving apparatus 50 includes an error detection part 501, a QoS reference part 502 (retransmission requesting means), a sequence number reference part 503 (retransmission requesting means), a buffer part 504 (holding means), and a packet reconfiguration part 505. When the radio link control station 102 with the frame receiving apparatus 50 therein receives a radio frame, the radio frame is fed from a lower layer to the error detection part 501 of the frame receiving apparatus 50.

The error detection part 501 is a part that performs error detection of each radio frame, that discards a frame with error, and that outputs a frame without error to the QoS reference part 502.

The QoS reference part 502 is a part that refers to a QoS identifier of each frame outputted from the error detection part 501, that outputs an acknowledgement type frame to the sequence number reference part 503, and that outputs an unacknowledgement type frame to the packet reconfiguration part 505.

The sequence number reference part 503 is a part that refers to a sequence number of each acknowledgement type frame and that transmits an ACK with the sequence number to the frame transmitting apparatus 40. The sequence number reference part 503 also outputs an acknowledgement type frame outputted from the QoS reference part 502, to the buffer part 504. Furthermore, the sequence number reference part 503 refers to a sequence number of each acknowledgement type frame and, when detecting a frame loss with a sequence number drop, instructs the buffer part 504 to buffer an acknowledgement type frame received thereafter.

The buffer part 504 is a part that outputs an acknowledgement type frame outputted from the sequence number reference part 503, to the packet reconfiguration part 505. When receiving an instruction to buffer an acknowledgement type frame, from the sequence number reference part, the buffer part 504 buffers an acknowledgement type frame received thereafter. Furthermore, when receiving an acknowledgement type frame retransmitted from the frame transmitting apparatus 40, the buffer part 504 performs ordering control of frames including every buffered acknowledgement type frame and outputs the frames in order to the packet reconfiguration part 505.

The packet reconfiguration part 505 is a part that removes a radio protocol header from each of radio frames (acknowledgement type frame and unacknowledgement type frame) outputted from the QoS reference part 502 and from the buffer part 504 and that reconfigures a data packet and transfers it to an upper layer.

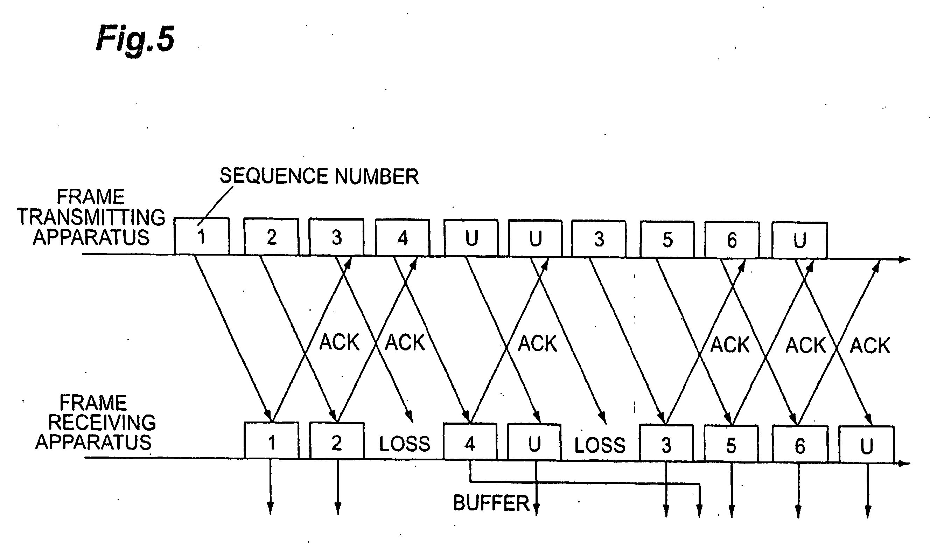

In order to describe a method of transmission/reception of frames in the network 1a of the present embodiment, the operation of the aforementioned frame transmitting apparatus 40 and frame receiving apparatus 50 will be described in detail with reference to Fig. 5. Each "U" in Fig. 5 indicates an unacknowledgement type frame. In the example of Fig. 5, the sequence number reference part 503 of the frame receiving apparatus 50 detects a loss of frame 3. The sequence number reference part 503 instructs the buffer part 504 to buffer a subsequent acknowledgement type frame, and then the buffer part 504 buffers frame 4. When receiving the frame 3 retransmitted thereafter, the buffer part 504 performs the ordering control and the packet reconfiguration part 505 reconfigures a packet. Since an unacknowledgement type frame is directly outputted from the QoS reference part 502 to the packet reconfiguration part 505, it is not subjected to the buffer process in the buffer part 504.

The above described the example in which the sequence number management was carried out for a radio protocol connection, and subsequently, an example in which the sequence number management is carried out for each data flow identifier will be described.

The QoS identifying part 401 identifies the QoS information described in each data packet or the QoS information of a connection forming data flows, and identifies a data flow. This data flow is identified based on IP address of IP packet and a port number of the transport layer protocol, a VCI (Virtual Channel Identifier) of ATM connection, or the like.

The frame building part 402 divides a data packet, if necessary, to generate radio frames. When the length of the data packet is longer than the maximum load length of radio frame, the frame building part 402 divides the data packet to generate radio frames. The frame building part 402 sequentially provides generated acknowledgement type frames with their respective sequence numbers for each data flow identifier. The retransmission management part 403 starts the retransmission timer at the same time as transmission of a frame, and buffers the frame for retransmission before receiving an acknowledgement response (ACK) from the frame receiving apparatus. When receiving an ACK, the retransmission management part 403 discards the buffered frame. When detecting a timeout of the retransmission timer or a frame loss from the sequence number of the ACK, the retransmission management part 403 outputs the buffered frame to the error detection code providing part 404.

The sequence number reference part 503 refers to a sequence number of each acknowledgement type frame and, when detecting a frame loss with a sequence number drop, instructs the buffer part 504 to buffer an acknowledgement type frame of the same data flow received thereafter.

When receiving an instruction to buffer an acknowledgement type frame, from the sequence number reference part, the buffer part 504 buffers an acknowledgement type frame of the same data flow received thereafter. Furthermore, when receiving an acknowledgement type frame retransmitted from the frame transmitting apparatus 40, the buffer part 504 performs the ordering control of frames with every acknowledgement type frame of the same data flow buffered and outputs the frames in order to the packet reconfiguration part 505.

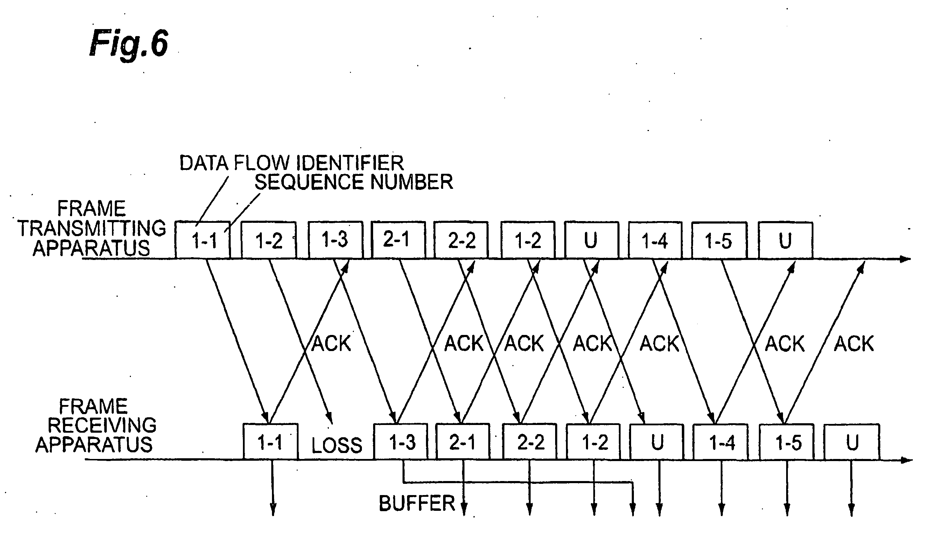

The example in which the sequence number management is carried out for each data flow identifier will be described in detail with reference to Fig. 6. Each "U" in Fig. 6 indicates an unacknowledgement type frame. A numeral before a hyphen in each frame indicates a data flow identifier, and a numeral after a hyphen a sequence number in each data flow. In the example of Fig. 6, the sequence number reference part 503 of the frame receiving apparatus 50 detects a loss of frame 1-2. When the sequence number reference part 503 instructs the buffer part 504 to buffer a subsequent acknowledgement type frame of the same data flow, the buffer port 504 buffers frame 1-3. When receiving the frame 1-2 retransmitted thereafter, the buffer part 504 performs the ordering control of frames and the packet reconfiguration part 505 reconfigures a packet. Frames 2-1 to 2-2 of a different data flow are directly outputted without being buffered, to the packet reconfiguration part 505.

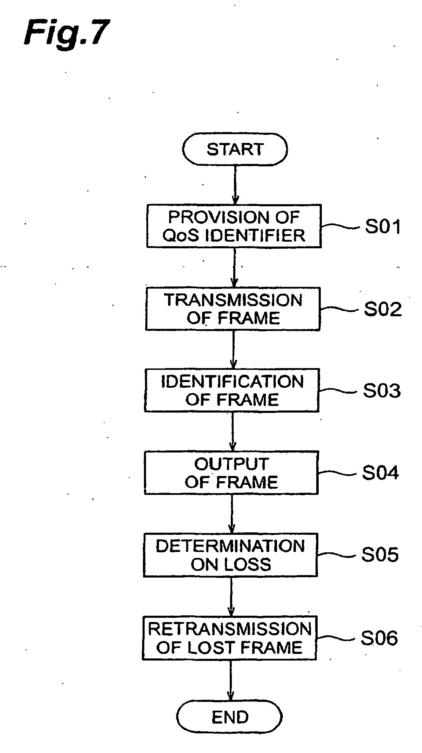

The operation of the present embodiment will be described with reference to the flowchart shown in Fig. 7. The frame building part 402 of the frame transmitting apparatus 40 builds frames for transmission of a data packet and provides each of the built frames with a QoS identifier (step S01).

The frames with the respective QoS identifiers are transmitted to the frame receiving apparatus 50 (step S02).

The QoS reference part 502 of the frame receiving apparatus 50 identifies whether each frame is an acknowledgement type frame or an unacknowledgement type frame, based on its QoS identifier (step S03).

The QoS reference part 502 outputs an acknowledgement type frame to the sequence number reference part 503 and outputs an unacknowledgement type frame to the packet reconfiguration part 505 (step S04).

The sequence number reference part 503 determines whether a frame is lost, for each acknowledgement type frame, and requests retransmission of a lost acknowledgement type frame (step 505).

In response to the request, the retransmission management part 403 outputs a corresponding acknowledgement type frame to the error detection code providing part 404. The error detection code providing part 404 provides an error detection code for the acknowledgement type frame outputted from the retransmission management part 403, and transmits the radio frame to the frame receiving apparatus 50 (step S06).

## Claims

1. A frame transmission/reception system (1a) for transferring a data packet on a connection established prior to communication, the system (1a) comprising:
• a frame transmitting apparatus (40), comprising identifier providing means (401) for building frames for transmission of the data packet and for providing each of the built frames with an identifier for identifying whether the frame is an acknowledgement type frame for which determining whether a frame is lost is to be performed or an unacknowledgement type frame for which determining whether a frame is lost is not to be performed; and
• a frame receiving apparatus (50), comprising retransmission requesting means (503) for identifying whether a frame is an acknowledgement type frame or an unacknowledgement type frame, based on the identifier provided therefor, and for determining whether a frame is lost, only for each acknowledgement type frame, and requesting retransmission of the lost acknowledgement type frame;
• wherein the frame transmitting apparatus (40) further comprises retransmitting means (403) for retransmitting the acknowledgement type frame under the request for the retransmission.

2. The frame transmission/reception system (1a) according to claim 1,
wherein the frame receiving apparatus is configured while for the acknowledgement type frame to perform a frame loss determination and to request retransmission of loss frames, for an unacknowledgement type frame not to perform such a frame loss determination.

3. A frame transmitting apparatus (40) used in a frame transmission/reception system (1a) for transferring a data packet on a connection established prior to communication, the frame transmitting apparatus (40) comprising:
• identifier providing means (401) for building frames for transmission of the data packet and for providing each of the built frames with an identifier for identifying whether the frame is an acknowledgement type frame for which determining whether a frame is lost is to be performed or an unacknowledgement type frame for which determining whether a frame is lost is not to be performed;
wherein the data packet is comprised of a plurality of data flows, and
wherein the identifier providing means (401) provides each of the frames with a data flow identifier for identifying one of the data flows; and
the frame transmitting apparatus (40) further comprising number providing means (402) for providing each acknowledgement type frame with a sequence number for each established connection and for each data flow identifier.

4. A frame receiving apparatus (50) used in a frame transmission/reception system (1a) for transferring a data packet on a connection established prior to communication the frame receiving apparatus (50) comprising:
• retransmission requesting means (503) for identifying whether a frame is an acknowledgement type frame for which determining whether a frame is lost is to be performed or an unacknowledgement type frame for which determining whether a frame is lost is not to be performed, based on an identifier provided therefor, and for determining whether a frame is lost, only for each acknowledgement type frame, and requesting retransmission of the lost acknowledgement type frame.

5. The frame receiving apparatus (50) according to claim 4, configured while for the acknowledgement type frame to perform a frame loss determination and to request retransmission of loss frames, for an unacknowledgement type frame not to perform such a frame loss determination.

6. The frame receiving apparatus (50) according to any one of Claims 4 or 5,
comprising holding means (504) for, when the retransmission requesting means (503) requests retransmission of the acknowledgement type frame, temporarily holding a previously received acknowledgement type frame until reception of the acknowledgement type frame retransmitted according to the request for the retransmission.

7. The frame receiving apparatus (50) according to Claim 6, wherein the data packet is comprised of a plurality of data flows, and
wherein, where each of the frames is provided with a data flow identifier for identifying each of the data flows,
the holding means (504) temporarily holds an acknowledgement type frame with the same data flow identifier as that of the lost acknowledgement type frame.

8. A frame transmission/reception method of transferring a data packet on a connection established prior to communication, the frame transmission/reception method comprising:
• a step (S01) wherein identifier providing means (401) in a frame transmitting apparatus (40) builds frames for transmission of the data packet and provides each of the built frames with an identifier for identifying whether the frame is an acknowledgement type frame for which determining whether a frame is lost is to be performed or an unacknowledgement type frame for which determining whether a frame is lost is not to be performed;
• a step (S03) wherein retransmission requesting means (S03) in a frame receiving apparatus (50) identifies whether a frame is an acknowledgement type frame or an unacknowledgement type frame, based on the identifier provided therefor, and the retransmission requesting means determines whether a frame is lost, only for each acknowledgement type frame, and requests retransmission of the lost acknowledgement type frame; and
• a step (S06) wherein retransmitting means (403) in the frame transmitting apparatus (40) retransmits the acknowledgement type frame under the request for the retransmission.

9. The frame transmission/reception method according to claim 8,
wherein while for the acknowledgement type frame the frame receiving apparatus performs a frame loss determination and requests retransmission of loss frames, for an unacknowledgement type frame the frame receiving apparatus does not perform such a frame loss determination.

## Patentansprüche

1. Ein Rahmen-Übertragungs/Empfangs-System (1a) zum Übertragen eines Datenpakets über eine Verbindung, welche vor der Datenübertragung aufgebaut wurde, das System (1a) aufweisend:
• eine Rahmen-Übertragungs-Vorrichtung (40) aufweisend ein Kennung-Bereitstellungs-Mittel (401) zum Erstellen von Rahmen zur Übertragung des Datenpakets und zum Bereitstellen eines jeden der erstellten Rahmen mit einer Kennung zum Kennzeichnen, ob der Rahmen ein Bestätigungs-Typ-Rahmen, für den das Ermitteln, ob ein Rahmen verlorengegangen ist, durchgeführt werden soll, oder ein Nicht-Bestätigungs-Typ-Rahmen ist, für den das Ermitteln, ob ein Rahmen verlorengegangen ist, nicht durchgeführt werden soll; und
• eine Rahmen-Empfangs-Vorrichtung (50) aufweisend, ein Neu-Übertragung-Anforderungs-Mittel (503) zum Ermitteln, ob ein Rahmen ein Bestätigungs-Typ-Rahmen oder ein Nicht-Bestätigungs-Typ-Rahmen ist, basierend auf der Kennung, die dafür bereitgestellt wurde, und zum Ermitteln, ob ein Rahmen verlorengegangen ist, nur für jeden Bestätigungs-Typ-Rahmen und Anfordern der Neu-Übertragung des verlorengegangen Bestätigungs-Typ-Rahmens;
• wobei die Rahmen-Übertragungs-Vorrichtung (40) ferner ein Neu-Übertragungs-Mittel (403) zum Neu-Übertragen des Bestätigungs-Typ-Rahmens bei der Anforderung der Neu-Übertragung aufweist.

2. Das Rahmen-Übertragungs/Empfangs-System (1a) gemäß Anspruch 1,
wobei die Rahmen-Empfangs-Vorrichtung eingerichtet ist, für den Bestätigungs-Typ-Rahmen eine Rahmen-Verlorengegangen-Ermittlung durchzuführen und die Neu-Übertragung von verlorengegangenen Rahmen anzufordern, für einen Nicht-Bestätigungs-Typ-Rahmen hingegen eine solche Rahmen-Verlorengegangen-Ermittlung nicht durchzuführen.

3. Eine Rahmen-Übertragungs-Vorrichtung (40), welche in einem Rahmen-Übertragungs/Empfangs-System (1a) zum Übertragen eines Datenpakets über eine Verbindung, welche vor der Datenübertragung aufgebaut wurde, verwendet wird, die Rahmen-Übertragungs-Vorrichtung (40) aufweisend:
• ein Kennung-Bereitstellungs-Mittel (401) zum Erstellen von Rahmen zur Übertragung des Datenpakets und zum Bereitstellen eines jeden der erstellten Rahmen mit einer Kennung zum Kennzeichnen, ob der Rahmen ein Bestätigungs-Typ-Rahmen, für den das Ermitteln, ob ein Rahmen verlorengegangen ist, durchgeführt werden soll, oder ein Nicht-Bestätigungs-Typ-Rahmen ist, für den das Ermitteln, ob ein Rahmen verlorengegangen ist, nicht durchgeführt werden soll;
wobei das Datenpaket eine Mehrzahl von Datenflüssen aufweist, und
wobei das Kennung-Bereitstellungs-Mittel (401) jeden der Rahmen mit einer Datenfluss-Kennung zum Kennzeichnen eines der Datenflüsse bereitstellt; und
die Rahmen-Übertragungs-Vorrichtung (40) ferner aufweisend ein Nummer-Bereitstellungs-Mittel (402) zum Bereitstellen eines jeden Bestätigungs-Typ-Rahmens mit einer Sequenz-Nummer für jede aufgebaute Verbindung und für jede Datenfluss-Kennung.

4. Eine Rahmen-Empfangs-Vorrichtung (50), welche in einem Rahmen-Übertragungs/Empfangs-System (1a) zum Übertragen eines Datenpakets über eine Verbindung, welche vor der Datenübertragung aufgebaut wurde, verwendet wird, die Rahmen-Empfangs-Vorrichtung (50) aufweisend:
• ein Neu-Übertragung-Anforderungs-Mittel (503) zum Ermitteln, ob ein Rahmen ein Bestätigungs-Typ-Rahmen, für den das Ermitteln, ob ein Rahmen verlorengegangen ist, durchgeführt werden soll, oder ein Nicht-Bestätigungs-Typ-Rahmen ist, für den das Ermitteln, ob ein Rahmen verlorengegangen ist, nicht durchgeführt werden soll, basierend auf einer Kennung, die dafür bereitgestellt wurde, und zum Ermitteln, ob ein Rahmen verlorengegangen ist, nur für jeden Bestätigungs-Typ-Rahmen und zum Anfordern der Neu-Übertragung des verlorengegangenen Bestätigungs-Typ-Rahmens.

5. Die Rahmen-Empfangs-Vorrichtung (50) gemäß Anspruch 4,
welche eingerichtet ist, für den Bestätigungs-Typ-Rahmen eine Rahmen-Verlorengegangen-Ermittlung durchzuführen und die Neu-Übertragung verlorengegangener Rahmen anzufordern, für einen Nicht-Bestätigungs-Typ-Rahmen hingegen eine solche Rahmen-Verlorengegangen-Ermittlung nicht durchzuführen.

6. Die Rahmen-Empfangs-Vorrichtung (50) gemäß einem der Ansprüche 4 oder 5,
aufweisend ein Halte-Mittel (504) zum vorübergehenden Halten eines zuvor empfangenen Bestätigungs-Typ-Rahmens bis zum Empfang des Bestätigungs-Typ-Rahmens, welcher gemäß der Anforderung der Neu-Übertragung neu übertragen wurde, wenn das Neu-Übertragung-Anforderung-Mittel (503) die Neu-Übertragung des Bestätigungs-Typ-Rahmens anfordert.

7. Die Rahmen-Empfangs-Vorrichtung (50) gemäß Anspruch 6, wobei das Datenpaket eine Mehrzahl von Datenflüssen aufweist, und
wobei, wenn ein jeweiliger Rahmen mit einer Datenfluss-Kennung zum Kennzeichnen eines jeweiligen Datenflusses bereitgestellt ist,
das Halte-Mittel (504) vorübergehend einen Bestätigungs-Typ-Rahmen mit derselben Datenfluss-Kennung wie die des verlorengegangenen Bestätigungs-Typ-Rahmens hält.

8. Ein Rahmen-Übertragungs/Empfangs-Verfahren zum Übertragen eines Datenpakets über eine Verbindung, welche vor der Datenübertragung aufgebaut wurde, das Rahmen-Übertragungs/Empfangs-Verfahren aufweisend:
• einen Schritt (S01), in dem das Kennung-Bereitstellungs-Mittel (401) in einer Rahmen-Übertragungs-Vorrichtung (40) Rahmen zur Übertragung des Datenpakets erstellt und jeden der erstellten Rahmen mit einer Kennung bereitstellt zum Kennzeichnen, ob der Rahmen ein Bestätigungs-Typ-Rahmen, für den das Ermitteln, ob ein Rahmen verlorengegangen ist, durchgeführt werden soll, oder ein Nicht-Bestätigungs-Typ-Rahmen ist, für den das Ermitteln, ob ein Rahmen verlorengegangen ist, nicht durchgeführt werden soll;
• einen Schritt (S03), in dem das Neu-Übertragung-Anforderungs-Mittel (503) in einer Rahmen-Empfangs-Vorrichtung (50) ermittelt, ob ein Rahmen ein Bestätigungs-Typ-Rahmen oder ein Nicht-Bestätigungs-Typ-Rahmen ist, basierend auf der Kennung, die dafür bereitgestellt wurde, und das Neu-Übertragung-Anforderungs-Mittel (503) ermittelt, ob ein Rahmen verlorengegangen ist, nur für jeden Bestätigungs-Typ-Rahmen und die Neu-Übertragung des verlorengegangen Bestätigungs-Typ-Rahmens anfordert; und
• einen Schritt (S06), in dem das Neu-Übertragungs-Mittel (403) in der Rahmen-Übertragungs-Vorrichtung (40) den Bestätigungs-Typ-Rahmen bei der Anforderung der Neu-Übertragung neu überträgt.

9. Das Rahmen-Übertragungs/Empfangs-Verfahren gemäß Anspruch 8,
wobei, während die Rahmen-Empfangs-Vorrichtung eine Rahmen-Verlorengegangen-Ermittlung für den Bestätigungs-Typ-Rahmen durchführt und die Neu-Übertragung verlorengegangener Rahmen anfordert, die Rahmen-Empfangs-Vorrichtung für einen Nicht-Bestätigungs-Typ-Rahmen eine solche Rahmen-Verlorengegangen-Ermittlung nicht durchführt.

## Revendications

1. Système d'émission/réception de trame (1a) destiné à transférer un paquet de données sur une connexion établie avant la communication, le système (1a) comprenant :
- un appareil d'émission de trame (40) comprenant un moyen de fourniture d'identifiant (401) destiné à créer des trames pour la transmission du paquet de données et à fournir à chacune des trames créées un identifiant pour identifier si la trame est une trame de type accusé de réception pour laquelle une détermination permettant de savoir si une trame est perdue, doit être exécutée, ou une trame de type non accusé de réception pour laquelle une détermination permettant de savoir si une trame est perdue, ne doit pas être exécutée ; et
- un appareil de réception de trame (50) comprenant un moyen de demande de retransmission (503) destiné à identifier si une trame est une trame de type accusé de réception ou une trame de type non accusé de réception, sur la base de l'identifiant qui lui est fourni, et à déterminer si une trame est perdue, seulement pour chaque trame de type accusé de réception, et à demander une retransmission de la trame de type accusé de réception perdue ;
- dans lequel l'appareil d'émission de trame (40) comprend en outre un moyen de retransmission (403) destiné à retransmettre la trame de type accusé de réception dans le cas d'une demande de retransmission.

2. Système d'émission/réception de trame (1a) selon la revendication 1,
dans lequel l'appareil de réception de trame est configuré, pour la trame de type accusé de réception, de façon à exécuter une détermination de perte de trame et à demander une retransmission des trames perdues, et, pour une trame de type non accusé de réception, de façon à ne pas exécuter une telle détermination de perte de trame.

3. Appareil d'émission de trame (40) utilisé dans un système d'émission/réception de trame (1a) destiné à transférer un paquet de données sur une connexion établie avant la communication, l'appareil d'émission de trame (40) comprenant :
- un moyen de fourniture d'identifiant (401) destiné à créer des trames pour la transmission du paquet de données et à fournir à chacune des trames créées un identifiant pour identifier si la trame est une trame de type accusé de réception pour laquelle une détermination permettant de savoir si une trame est perdue, doit être exécutée, ou une trame de type non accusé de réception pour laquelle une détermination permettant de savoir si une trame est perdue, ne doit pas être exécutée ;
dans lequel le paquet de données est composé d'une pluralité de flux de données ; et
dans lequel le moyen de fourniture d'identifiant (401) fournit à chacune des trames un identifiant de flux de données pour identifier l'un des flux de données ; et
l'appareil d'émission de trame (40) comprend en outre un moyen de fourniture de numéro (402) destiné à fournir à chaque trame de type accusé de réception un numéro d'ordre pour chaque connexion établie et pour chaque identifiant de flux de données.

4. Appareil de réception de trame (50) utilisé dans un système d'émission/réception de trame (1a) destiné à transférer un paquet de données sur une connexion établie avant une communication, l'appareil de réception de trame (50) comprenant :
- un moyen de demande de retransmission (503) destiné à identifier si une trame est une trame de type accusé de réception pour laquelle une détermination permettant de savoir si une trame est perdue, doit être exécutée, ou une trame de type non accusé de réception pour laquelle une détermination permettant de savoir si une trame est perdue, ne doit pas être exécutée, sur la base d'un identifiant qui lui est fourni, et à déterminer si une trame est perdue, seulement pour chaque trame de type accusé de réception, et à demander une retransmission de la trame de type accusé de réception perdue.

5. Appareil de réception de trame (50) selon la revendication 4,
configuré, pour la trame de type accusé de réception, de façon à exécuter une détermination de perte de trame et à demander une retransmission des trames perdues, et, pour une trame de type non accusé de réception, de façon à ne pas exécuter une telle détermination de perte de trame.

6. Appareil de réception de trame (50) selon la revendication 4 ou 5,
comprenant un moyen de conservation (504) destiné à conserver de manière temporaire une trame de type accusé de réception reçue précédemment, lorsque le moyen de demande de retransmission (503) demande une retransmission de la trame de type accusé de réception, jusqu'à la réception de la trame de type accusé de réception retransmise selon la demande de retransmission.

7. Appareil de réception de trame (50) selon la revendication 6,
dans lequel le paquet de données est composé d'une pluralité de flux de données ; et
dans lequel, chacune des trames est dotée d'un identifiant de flux de données pour identifier chacun des flux de données ;
le moyen de conservation (504) contient temporairement une trame de type accusé de réception avec le même identifiant de flux de données que celui de la trame de type accusé de réception perdue.

8. Procédé d'émission/réception de trame destiné à transférer un paquet de données sur une connexion établie avant la communication, le procédé d'émission/réception de trame comprenant :
- une étape (S01) dans laquelle un moyen de fourniture d'identifiant (401) dans un appareil d'émission de trame (40) crée des trames pour la transmission du paquet de données, et fournit à chacune des trames créées un identifiant pour identifier si la trame est une trame de type accusé de réception pour laquelle une détermination permettant de savoir si une trame est perdue, doit être exécutée, ou une trame de type non accusé de réception pour laquelle une détermination permettant de savoir si une trame est perdue, ne doit pas être exécutée ;
- une étape (S03) dans laquelle un moyen de demande de retransmission (503) dans un appareil de réception de trame (50) identifie si une trame est une trame de type accusé de réception ou une trame de type non accusé de réception, sur la base de l'identifiant qui lui est fourni, et le moyen de demande de retransmission détermine si une trame est perdue, seulement pour chaque trame de type accusé de réception, et demande une retransmission de la trame de type accusé de réception perdue ; et
- une étape (S06) dans laquelle un moyen de retransmission (403) dans l'appareil d'émission de trame (40) retransmet la trame de type accusé de réception dans le cas d'une demande de retransmission.

9. Procédé d'émission/réception de trame selon la revendication 8,
dans lequel, pour la trame de type accusé de réception, l'appareil de réception de trame exécute une détermination de perte de trame et demande une retransmission des trames perdues, et, pour une trame de type non accusé de réception, l'appareil de réception de trame n'exécute pas une telle détermination de perte de trame.
